# EUROPEAN PATENT APPLICATION

(11) **EP 2 101 500 A1**
(43) Date of publication of application: **16.09.2009**
(21) Application number: 08706584.3
(22) Date of filing: 29.01.2008
(51) Int. Cl.: H04N 7/173, H04L 12/56

(54) **A VIDEO ON DEMAND CONTROLLING METHOD, A CLIENT DEVICE AND A SWITCH CONTROLLING EQUIPMENT**

(30) Priority: 22.05.2007 CN 200710107996
(71) Applicant: Huawei Technologies Co., Ltd., Longgang District, Shenzhen Guangdong 518129 (CN)
(72) Inventor: GAO, Zhi, Longgang District 518129 Shenzhen (CN)
(74) Representative: Kreuz, Georg Maria
(86) International application number: PCT/CN2008/070207
(87) International publication number: WO 2008/141540

(57) **Abstract**

The present invention discloses a VOD control method, a client device, and a switching control apparatus, relating to a media playing technology. The method includes: receiving VOD commands from a user, selecting and joining a multicast/broadcast channel with the playing time close to the playing start time of the video program on demand, receiving and buffering the data of the video program from a multicast/broadcast server; and judging whether the tolerance between the playing time of the multicast video program on the multicast/broadcast channel and the playing time of the video program on demand is within a threshold, and if so, playing the buffered multicast/broadcast data. The client device includes: a decoding and outputting unit, an obtaining unit, a switching control unit, a unicast control unit, a unicast data receiving and buffering unit, a multicast control unit, and a multicast data receiving and buffering unit. The technical solution provided by the present invention can implement VOD services with few server resources and network bandwidths.

## Description

### Field of the Invention

The present invention relates to a media playing technology, and in particular, to a video on demand (VOD) control method, a client device, and a switching control apparatus.

### Background of the Invention

The digital TV technology, which is a substitute for traditional analog TV, lays a foundation for flexible processing of TV programs and brings about various new services. The original broadcast and TV services are unidirectional (without service interaction between a user and the head end) and use the broadcast mode (a program is received by a lot of audience). However, users have more and more requirements. For example, they want to watch desired programs at any time when they want to watch, and they want to freely choose any section of a program to watch.

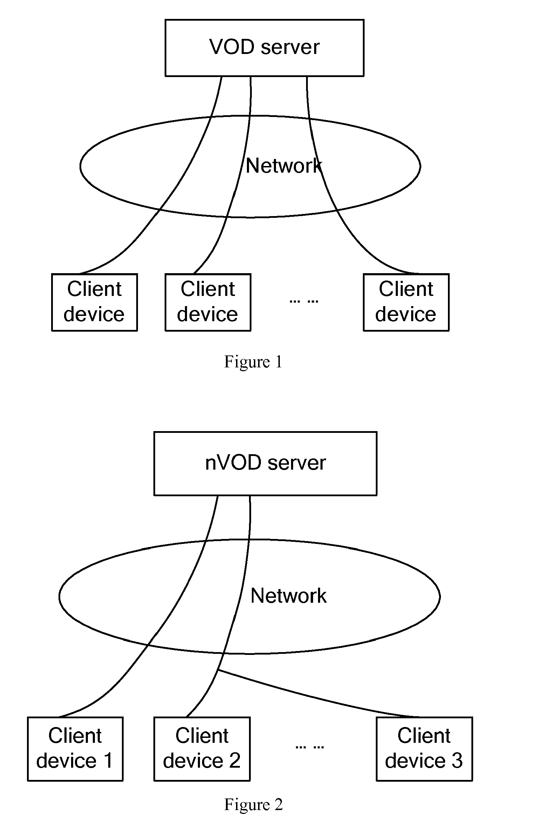

To meet their requirements, a VOD technology emerges. Figure 1 illustrates the implementation principle of the VOD technology. An operator stores a large number of movies in a VOD server of the VOD system. The VOD technology is used to establish a unicast link between the VOD server and the client device of each VOD user. Each client device can control the playing and obtain media streams through interactions with the VOD server on the network through a dedicated link, thus enabling each user to control the playing freely. Thus, the user may control the playing of a program freely by sending a VOD request to the VOD system, instead of watching the program passively.

However, the VOD technology has high requirements for the processing capability of the server and occupies high network bandwidths. This requires high system costs, which grow with the increase of users. For example, when 100 users play a program on demand at the same time, the server needs to output 100 VOD streams at the same time and occupy 100 network bandwidths. When 10,000 users play a program on demand at the same time, the server needs to output 10,000 VOD streams at the same time and occupy 10,000 network bandwidths.

It is difficult to watch missed broadcast and TV programs. The VOD requires high costs in the server and network bandwidths. The integration of the broadcast and TV services brings about some new services, for example, near video on demand (nVOD).

Figure 2 illustrates the implementation principle of nVOD technology. An nVOD server needs to output a limited number of streams, and most of networks need to transmit a limited number of streams. The client device selects to receive a stream according to the access time. As shown in Figure 2, the nVOD server needs to output one bandwidth when a client device 1 receives an nVOD multicast channel, while the nVOD server needs to output one bandwidth when a client device 2 and a client device 3 receive an nVOD multicast channel. The nVOD and the broadcast & TV services use a same technology, thus occupying low bandwidths. However, the nVOD technology requires the user to play a program from the beginning after waiting for a period of time, and thus the user experience is poor. Taking a movie lasting two hours as an example, if a multicast channel is created every 15 minutes to play the movie, a total of eight channels are required. Users who want to play the movie before 8:00 receive the channel where programs begin at 8:00; users who want to play the movie between 8:00 and 8:15 receive the channel where programs begin at 8:15; and the rest may be inferred in the same way. At 10:00, the movie that is played first is complete and enters a new cycle. Obviously, adding channels with a single program may reduce the waiting time. This, however, requires the device to have a powerful processing capability, and occupies large bandwidths.

The nVOD service requires the user to wait for a long time, while the VOD service occupies a lot of server resources and bandwidths. It is a difficult problem for those skilled in this art to provide cost-effective and efficient VOD services.

### Summary of the Invention

To solve the problem that too many server resources and bandwidths are occupied in the conventional art and provide cost-effective and efficient VOD services, embodiments of the present invention provide a VOD control method, a client device and a switching control apparatus. The following describes the technical solution provided in the embodiments of the present invention.

A VOD control method includes:
receiving a VOD command from a user, selecting and joining a multicast or broadcast channel with the playing time closes to the playing start time of a video program that the user plays on demand, receiving data of the video program from a multicast or broadcast server, and buffering the data;
judging whether the tolerance between the playing time of the video program on the multicast or broadcast channel and the playing time of the video program on demand is within a preset threshold; if so, playing the buffered multicast or broadcast data; otherwise
establishing a unicast link with a unicast server, receiving and playing the video program data through the unicast link, disconnecting the unicast link when the tail of the received data is connected to the header of the buffered data, and continuing to play the video program by using the buffered data.

A client device provided in an embodiment of the present invention includes:
a decoding and outputting unit, adapted to decode data of a video program and output the data for displaying;
an obtaining unit, adapted to obtain unicast information of the video program and multicast or broadcast information on each multicast or broadcast channel, and receive playing control commands from a user;
a switching control unit, adapted to switch between multicast and unicast according to the playing control commands of the user, unicast information of the program, and information of each multicast channel;
a unicast control unit, adapted to establish a unicast link with a unicast server or disconnect the unicast link according to the control of the switching control unit;
a unicast data receiving and buffering unit, adapted to receive and buffer the data of the video program through the unicast link established by the unicast control unit, and output the buffered data to the decoding and outputting unit;
a multicast control unit, adapted to join or leave a multicast or broadcast channel selected by the switching control unit according to the control of the switching control unit; and
a multicast data receiving and buffering unit, adapted to receive the data of the video program from the multicast channel joined by the multicast control unit, and buffer the data, and output the buffered data to the decoding and outputting unit after the data of the unicast data receiving and buffering unit is output according to the control of the switching control unit.

A switching control apparatus provided in an embodiment of the present invention includes:
an obtaining unit, adapted to obtain unicast information of a video program and multicast or broadcast information on each multicast or broadcast channel, and receive playing control commands from a user; and
a switching control unit, adapted to switch multicast and unicast according to the playing control commands of the user, unicast information of the program, and information of each multicast channel.

The technical solution provided in embodiments of the present invention uses the unicast technology and multicast or broadcast technology to solve the problem that a lot of server resources and bandwidths are occupied and implement VOD services of the user, thus providing cost-effective and efficient VOD services.

### Brief Description of the Drawings

Figure 1 is a schematic diagram of VOD implementation in the conventional art;

Figure 2 is a schematic diagram of nVOD implementation in the conventional art;

Figure 3 is a schematic diagram of a VOD control method provided in an embodiment of the present invention;

Figure 4 shows a structure of a client device provided in an embodiment of the present invention;

Figure 5, Figure 6 and Figure 7 show a switching process in a VOD control method provided in an embodiment of the present invention; and

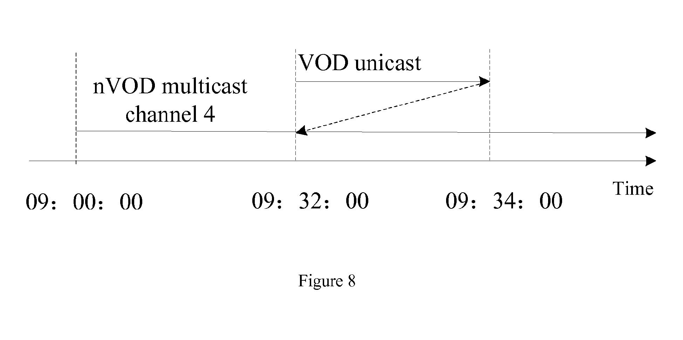

Figure 8 is a schematic diagram illustrating how to judge the connection between the tail and header of the unicast data and multicast data in an embodiment of the present invention.

### Detailed Description of the Invention

For better understanding of the objective, technical solution and merits of the present invention, the following describes the present invention in detail with reference to the accompanying drawings and preferred embodiments.

An embodiment of the present invention provides a VOD control method that uses the unicast technology and multicast or broadcast technology to implement VOD services. This may reduce costs in the server and network bandwidths, and provide cost-effective and efficient VOD services. The following describes this embodiment by taking the applications of the IPTV system as an example.

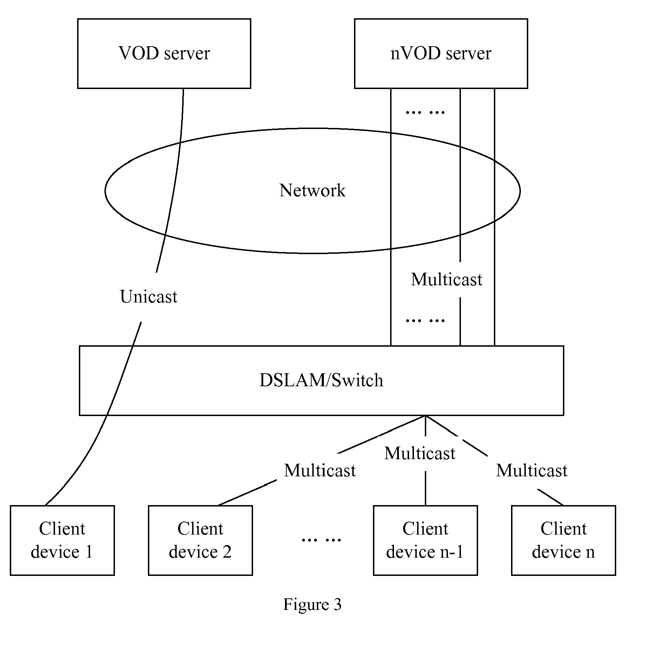

Figure 3 is a schematic diagram of the implementation of this embodiment. Supposing the nVOD server at the head end outputs n (n is greater than or equal to 1) multicast channels for a video program, the video program on each multicast channel is sent to a network in IP multicast mode, and each multicast channel plays the video program on a cyclic basis. In addition, each channel starts playing the program in turn according to a certain interval. The network may be a metropolitan area network (MAN) or an urban backbone network. The network may be connected without network devices. A client device joins an IP multicast channel through a network access device to receive the video program played on a channel. The client device is a control device used to receive IPTV programs, for example, a personal computer (PC) or a set top box (STB). The network access device may be a digital subscriber line access multiplex (DSLAM), a switch, an Ethernet based passive optical network (EPON) or a Gigabit passive optical network (GPON). The VOD server at the head end provides VOD services for the video program in unicast mode so that the user can play, fast forward, fast rewind, pause or position the video program.

In this embodiment, a switching control apparatus needs to perform switching between an nVOD multicast channel and a VOD unicast channel to implement the VOD services and reduce the quantity of occupied server resources and bandwidths. The following describes the details.

Step 1: Control the switching to a multicast channel when the user plays the program on demand

When the user begins to play the program on demand, the switching control apparatus searches for an nVOD multicast channel with the playing time of the multicast video program closest to the playing start time of the video program on demand, and controls the client device to join the closest nVOD multicast channel and receive multicast data from the closest nVOD multicast channel. Then the switching control apparatus judges whether the tolerance between the playing time of the multicast video program and the playing time of the video program on demand is within a preset threshold. If so, it indicates that the current playing time of the multicast channel is equal to or approximately equal to the required playing time, and the client device plays the received multicast data directly; otherwise, it indicates that some data is missed before the multicast channel, and the client device buffers the received multicast data but does not play the data. Meanwhile, the client device establishes a unicast link with the VOD server to request the missed video program data. After the tail of the data received from the VOD server is connected to the header of the data received from the multicast channel, the client device disconnects the unicast link from the VOD server, and receives program data from the nVOD multicast channel. During this switching process, the playing continues. After the unicast data is played, the client device continues the playing by using the multicast data.

The playing operation is controlled through sessions over the Real-Time Streaming Protocol (RTSP). The media data is transmitted over the User Datagram Protocol (UDP) or Transport Control Protocol (TCP). The RTSP protocol neither limits the transmission mode of RTSP messages and media data, nor limits whether the RTSP messages and media data are transmitted separately or interleaved during the transmission. This process is hereinafter referred to as the establishment of a unicast link.

Thus, based on the buffer capacity of the client device, the control method provided in this embodiment may replace the unicast mode at proper time to receive the video program data from a multicast channel. This makes it unnecessary to occupy the unicast server and saves network bandwidths, thus implementing cost-effective VOD services.

Step 2: Control when the user fast forwards or fast rewinds a program

When the user fast forwards or fast rewinds a program, the unicast mode is needed. The following three scenarios are involved:

If a fast forward or fast rewind command is received from the user when the unicast mode is available, the client device sends the command to the VOD server through the established unicast link. Then the client device receives unicast data sent by the unicast server according to the command and plays the received unicast data.

If a fast forward or fast rewind command is received from the user when the unicast and multicast modes are available, the client device leaves the multicast channel and sends the command to the VOD server through the established unicast link. Then the client device receives unicast data sent by the unicast server according to the command and plays the received unicast data.

If a fast forward or fast rewind command is received from the user when the multicast mode is available, the client device needs to re-establish the unicast link with the unicast server and leave the nVOD multicast channel. The client device sends the command to the unicast server through the re-established unicast link, receives unicast data sent by the unicast server according to the command, and plays the received unicast data.

Step 3: Control when the user pauses or positions a program

When the user pauses or positions a program, if a multicast channel is being received, the client device leaves the multicast channel; if there is a unicast link, the client device stops receiving the unicast data. The client device may disconnect the unicast link immediately or keep the unicast link.

Step 4: Control when the user resumes the normal playing after fast forward, fast rewind, pause or positioning

The following two scenarios are involved, depending on whether the unicast link is disconnected when the normal playing is resumed.

If the normal playing is resumed from fast forward or fast rewind, or the normal playing is resumed from pause or positioning while the unicast link is not disconnected, the client device reselects and joins the closest nVOD multicast channel. The switching control apparatus judges whether the tolerance between the playing time of the multicast video program and the playing time of the video program on demand is within the preset threshold. If so, it indicates that the current playing time of the multicast channel is equal to or approximately equal to the required playing time. Then the client device plays the received multicast data directly and disconnects the unicast link. Otherwise, it indicates that some data is missed before the multicast channel. Then the client device buffers the received multicast data but does not play the data. Meanwhile, the client device requests the missed data from the VOD server and plays the missed data. After the tail of the data received from the VOD server is connected to the header of the data received from the multicast channel, the client device disconnects the unicast link from the VOD server and receives program data from the nVOD multicast channel. During this switching process, the playing continues. After the unicast data is played, the client device continues the playing by using the multicast data.

If the normal playing is resumed from pause or positioning while the unicast link is already disconnected, the scenario is the same as scenario 1. The switching control apparatus searches for an nVOD multicast channel with the playing time close to the playing time of the video program on demand, and controls the client device to join the closest nVOD multicast channel and receive multicast data from the closest nVOD multicast channel. Then the switching control apparatus judges whether the tolerance between the playing time of the multicast video program and the playing time of the video program on demand is within a preset threshold. If so, it indicates that the current playing time of the multicast channel is equal to or approximately equal to the required playing time, and the client device plays the received multicast data directly; otherwise, it indicates that some data is missed before the multicast channel, and the client device buffers the received multicast data but does not play the data. Meanwhile, the client device establishes a unicast link with the VOD server to request the missed program data. After the tail of the data received from the VOD server is connected to the header of the data received from the multicast channel, the client device disconnects the unicast link from the VOD server, and receives program data from the nVOD multicast channel. During this switching process, the playing continues. After the unicast data is played, the client device continues the playing by using the multicast data.

When the user stops the playing, the client device leaves the multicast channel (if joined), and the process ends; the unicast link (if established) is disconnected, and the process ends.

The preset threshold in step 1 and step 4 should be set without any impact on watching the program. Generally, the time for starting a VOD service should not be longer than three seconds. In addition, there are other overheads. Thus, the preset threshold is smaller than three seconds.

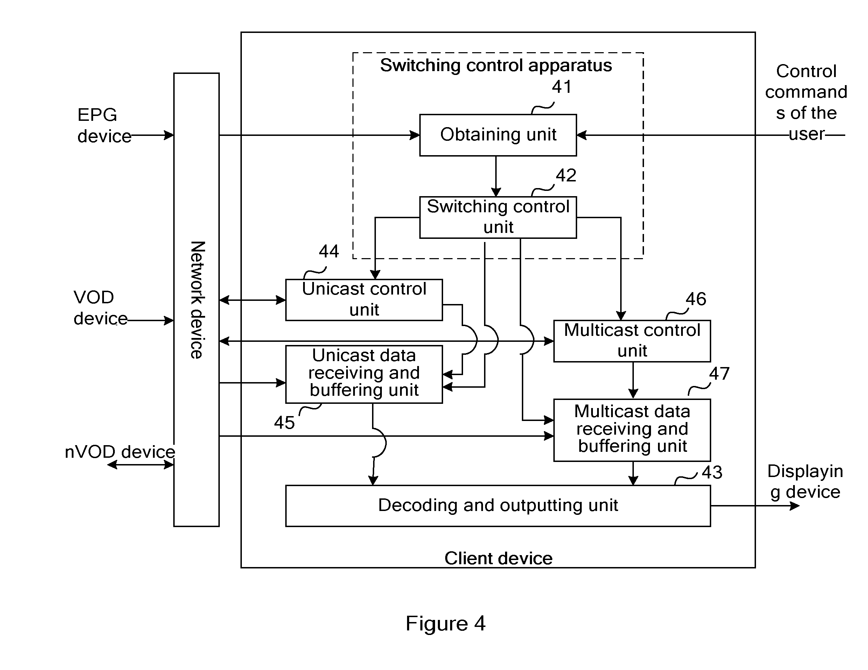

Figure 4 shows a client device provided in an embodiment of the present invention. The client device may be used to implement switching between unicast and multicast. The client device includes an obtaining unit 41, a switching control unit 42, a decoding and outputting unit 43, a unicast control unit 44, a unicast data receiving and buffering unit 45, a multicast control unit 46, and a multicast data receiving and buffering unit 47.

The obtaining unit 41 is adapted to obtain the information required for the playing control from an electronic program guide (EPG), and receive playing control commands from the user.

The obtained information required for the playing control includes unicast information and multicast information.

The unicast information includes the unicast uniform resource locator (URL) of a video program. The multicast information includes the playing start time of each multicast video program that is associated with the video program, and the multicast ID (a multicast video program is a multicast group, which is identified by a multicast address and a port number).

The switching control unit 42 is adapted to control the unicast control unit 44 and multicast control unit 46 to switch between unicast and multicast according to the playing commands of the user, and control the subsequent playing of the buffered multicast data after the unicast data is played.

In multicast control, the multicast ID of the selected multicast channel may be sent to the multicast control unit 46. The multicast control unit 46 joins the multicast channel to receive the multicast data of the video program.

The playing control commands of the user include: play, pause, fast forward, fast rewind, positioning, and stop.

The playing control commands of the user are sent through an infrared remote control, a mouse or a keyboard. If the unicast mode is used, a link is established between the unicast URL of the program obtained by the obtaining unit 41 and the unicast server and playing control is performed. If the multicast mode is used, a closest multicast channel is selected according to the playing start time of each multicast channel that is obtained by the obtaining unit 41. The current playing time of this multicast channel is larger than or equal to the playing start time of the video program on demand.

The decoding and outputting unit 43 is adapted to decode the data of the video program and output the data to a displaying device for displaying. The data of the video program is received in unicast or multicast mode.

The unicast control unit 44 is adapted to establish a unicast link with the VOD server and control the unicast data receiving and buffering unit 45 to receive and buffer the unicast data of the video program from the VOD server through the unicast link. The unicast data receiving and buffering unit 45 is adapted to output the buffered unicast data to the decoding and outputting unit 43.

The multicast control unit 46 is adapted to join the multicast channel of the video program selected by the switching control unit 42, and control the multicast data receiving and buffering unit 47 to receive the multicast data of the video program from the nVOD server. The multicast control unit 46 outputs the buffered multicast data to the decoding and outputting unit 43 according to the control commands of the switching control unit 42.

When determining that the tail of the received unicast data is connected to the header of the buffered multicast data, the switching control unit 42 triggers the unicast control unit 44 to disconnect the unicast link, and controls the multicast data receiving and buffering unit 47 to output the buffered multicast data after the unicast data buffered in the unicast data receiving and buffering unit 45 is played completely.

The unicast control unit 44 may be combined with or separated from the original VOD control unit. The multicast control unit 47 may be combined with or separated from the original BTV control unit.

When the obtaining unit 41 receives a fast forward or fast rewind command from the user, the switching control unit 42 re-triggers the unicast control unit 44 to establish a unicast link with the VOD server, and triggers the multicast control unit 46 to leave the multicast channel.

In a preferred embodiment, the obtaining unit 41 and the switching control unit 42 are configured in a client device of the user. The client device is a control device used to receive IPTV programs, for example, a PC or an STB. The obtaining unit 41 or the switching control unit 42 may compose a switching control apparatus. This switching control apparatus may be configured in any server on the network. For example, it may be configured in the EPG, VOD server or nVOD server, or it may be configured in an access device, for example, a switch.

If the switching control apparatus is configured in the client device of the user, the switching control is performed through internal lines and related playing control units of the client device.

If the switching control apparatus is configured a network entity other than the client device of the user, the switching control may be performed by defining a switching request and a switching response, where the switching request carries a playing control command of the user and playing time information of the video program that the user requests to play, and the switching response carries the channel and/or unicast control information of the selected multicast channel.

Through the preceding control, if the tolerance between the current playing time of the selected multicast channel and the playing start time of the video program on demand is within the preset threshold, the client device needs to join the multicast channel. Otherwise, the client device needs to join the multicast channel and obtain the missed data from the unicast server.

The current playing time of a multicast channel is the relative time counting from the program header according to the tolerance between the current time and the playing start time of the multicast channel. For example, if a program lasts two hours, and a multicast channel of the program plays the program from 08:00:00, the current playing time of the multicast channel is 01:05:00 when the time reaches 11:05:0. It should be noted that the multicast channel plays the program on a cyclic basis. The preceding current playing time is the time when the program is played in the second cycle.

The playing start time of the video program on demand is the relative time counting from the program header according to the playing commands of the user. For example, if the user starts a program on demand, the program is played from the beginning, and the playing start time is 00:00:00. If the user positions the program to 00:38:00 when the program is played until 00:05:00, the playing start time is 00:38:00. If the program is paused when the program is played until 00:09:00, the playing start time is 00:09:00. Similarly, if the program is played at the regular rate when it is played through fast forward or fast rewind until 00:16:00, the playing start time is 00:16:00.

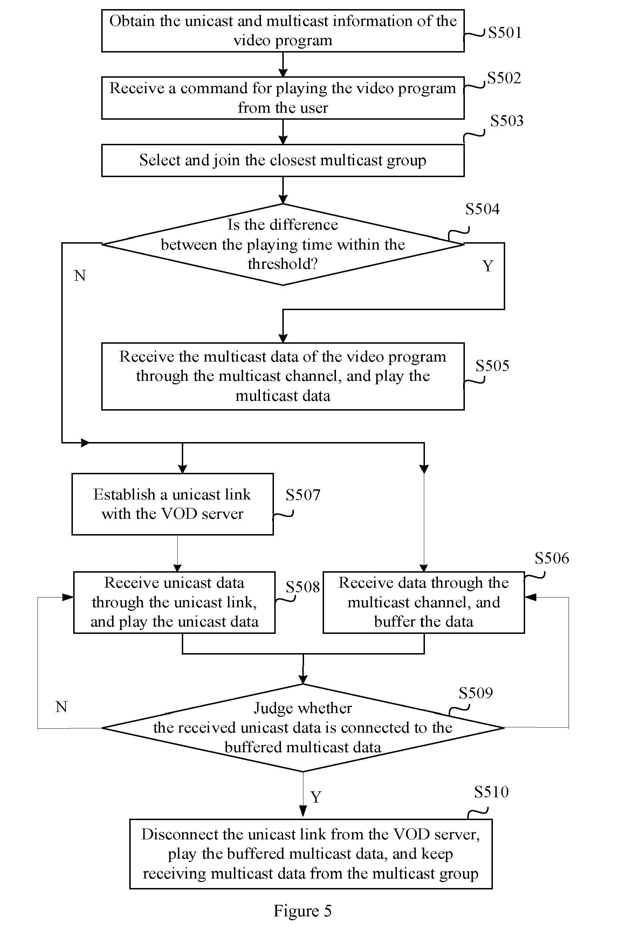

Figure 5 shows a process of a VOD control method provided in an embodiment of the present invention, supposing the switching control apparatus is configured in the client device. The process includes the following steps:

Block 501: After the client device is powered on, the client device obtains the unicast and multicast information of the video program when selecting a program.

The unicast information of the program includes a unicast URL, and the multicast information includes the playing start time of each multicast channel in the nVOD server.

Block 502: The client device receives a command for playing the video program from the user. Block 501 may be performed before or after block 502. That is, the client device may obtain the unicast and multicast information when selecting the program and then run the playing command; or the client device may select the program and then obtain the unicast and multicast information when running the playing command.

Block 503: Select and join a closest multicast channel.

Block 504: Judge whether the tolerance between the playing time of the joined multicast channel and the playing start time of the video program on demand is within the preset threshold. If so, the process goes to Block 505; otherwise, the process continues to Block 506, 507, and 508.

Block 505: The client device receives a video program through the multicast channel, and plays the video program.

Block 506: The client device receives multicast data through the multicast channel, and buffers the multicast data.

Block 507 to 508: The client device establishes a unicast link with the VOD server, receives unicast data through the unicast link, and plays the unicast data.

Block 509: Judge whether the tail of the received unicast data is connected to the header of the buffered multicast data. If so, the process goes to Block 510, and the unicast link with the VOD server is disconnected; the client device continues to play the buffered multicast data after the data received from the unicast link is played completely, and keeps the multicast data of the video program received from the multicast channel. Otherwise, block 506 and 508 are repeated until the tail of the received unicast data is connected to the header of the buffered multicast data, whereupon the client device continues the playing by using the multicast data.

The process of judging whether the VOD unicast data is connected to the nVOD multicast data is to judge whether continuous program data is formed. If so, it indicates that the missed data is already obtained from the VOD server, and then the process goes to block 510. Otherwise, the client device continues to obtain the missed data from the VOD server until the tail of the VOD unicast data is connected to the header of the nVOD multicast data.

Thus, when the user plays a video program on demand, the VOD server plays the program from the beginning to implement the VOD service. Meanwhile, it is necessary to switch to the closest nVOD multicast channel immediately so as to save VOD server resources and bandwidths.

After block 505 or 510, the client device receives the multicast data of the nVOD multicast channel and plays the program at the regular rate by using the received multicast data of the nVOD multicast channel.

If the user performs a pause operation in this state, the process of leaving the multicast channel is triggered. When the user resumes the playing, the process goes to block 503 again to select a new multicast channel.

If the user performs positioning, that is, the user chooses another position for playing, after the client device sends a playing message to the VOD server, the client device sends a new playing message when positioning the program. The client device receives a positioning command from the user, and the process of leaving the multicast channel is triggered. Then, the process goes to block 503 to select a new multicast channel.

If the user stops playing the program, the client device stops playing the multicast data and deletes the buffered multicast data. The process of leaving the multicast channel is triggered.

Those skilled in this art are familiar with the process of establishing or disconnecting the unicast link between the client device and the VOD server and the process of joining or leaving a multicast channel. For example, the preceding processes comply with the RTSP and IGMP protocols.

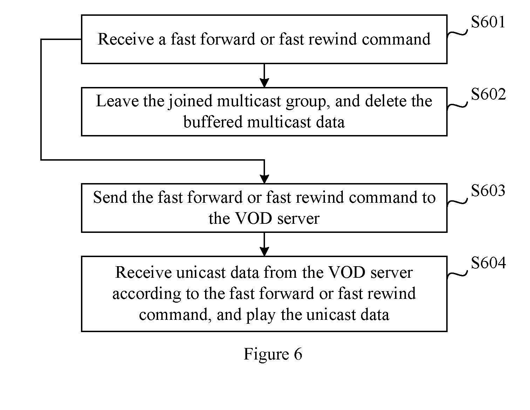

If the user chooses fast forward or fast rewind, which is unavailable on the nVOD multicast channel in this state, it is necessary to switch from multicast to unicast, as shown in Figure 6. The process includes the following steps:

Block 601: Receive a fast forward or fast rewind command from the user.

Block 602: Leave the joined multicast channel, and delete the buffered multicast data.

The client device sends a leave message to a multicast replicator over a multicast protocol (for example, IGMP). After receiving the leave message from the client device, the multicast replicator stops sending multicast data to the client device.

The nVOD data is received from the nVOD server by the client device. Because the client device is connected to the nVOD server through network devices, joining or leaving the multicast channel is controlled by these network devices. The network devices that interact with the client device and have the function of a multicast protocol (for example, IGMP) include but are not limited to a DSLAM, a switch, and a router, which are called multicast replicators.

Block 603: Send the fast forward or fast rewind command to the VOD server.

If the unicast link with the VOD server is disconnected when the client device receives the fast forward or fast rewind command, the client device re-establishes the unicast link. Otherwise, the client device sends the command to the VOD server.

Block 604: Receive the unicast data that is sent by the VOD server according to the fast forward or fast rewind command, and play the unicast data.

After block 604, the client device receives the VOD unicast data, and may respond to various VOD control commands of the user, for example, fast forward, fast rewind, pause, positioning, or stop. The specific control process is the same as the VOD control in the conventional art. For example, pausing the receiving of VOD unicast data is the process of sending a pause message to the VOD server by the client device over the RTSP protocol in the IPTV technology. Those skilled in this art are familiar with this process, so the process is not further described.

If the normal playing is resumed while there is a unicast link (for example, the normal playing is resumed from fast forward or fast rewind, the normal playing is resumed from pause after fast forward or fast rewind or resumed from pause before the client device enters the state of receiving the multicast data, or positioning is performed after fast forward or fast rewind or before the client device enters the state of receiving the multicast data), the client device re-selects a new multicast channel while keeping the unicast link, and switches to the new multicast channel so as to save VOD server resources and network bandwidths. The specific process is shown in Figure 5.

Thus, when the user wants to play the program at the regular rate, the client device tries to join an nVOD multicast channel to receive data to save VOD server resources and network bandwidths. The client device obtains data from the VOD server when some missed data cannot be obtained through the channel. The scenarios of playing at the regular rate include playing initially and playing at the regular rate after fast forward, fast rewind, pause or positioning. The processes are basically the same in these two scenarios.

If the user performs fast forward or fast rewind which is unavailable from the multicast server, it is necessary to switch back to the unicast server. The unicast server is used when the missed data needs to be obtained or when the user performs fast forward or fast rewind, thus reducing costs in the unicast server and network bandwidths.

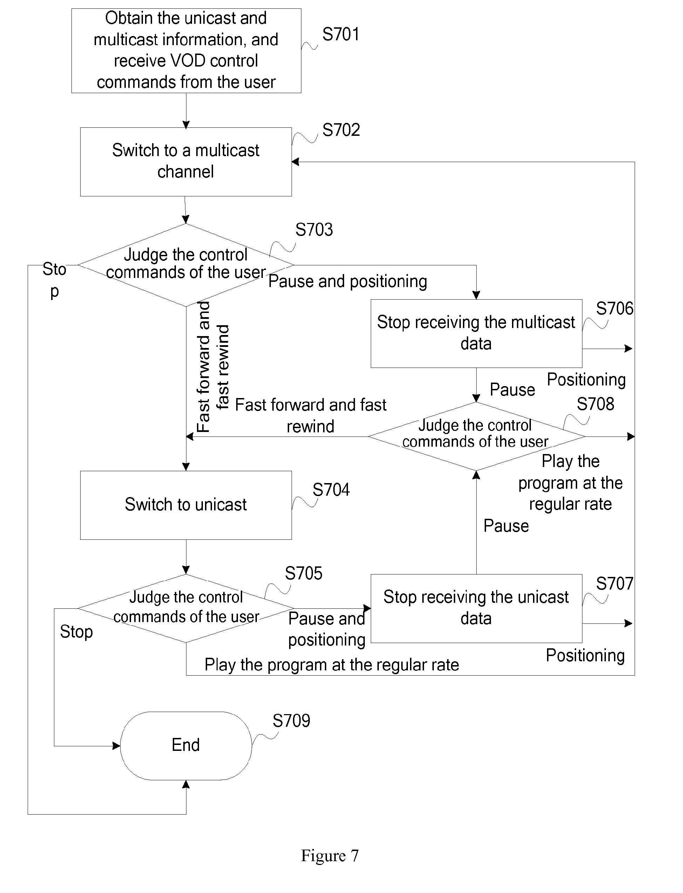

Figure 7 shows an overall control process. The process includes the following steps:

Block 701: Obtain the unicast and multicast information of the video program, and receive VOD control commands for the video program. See block 501 and 502 for details.

Block 702: Switch to the closest multicast channel. See block 503 to 510 for details.

The client device performs block 503 to switch to the closest nVOD multicast channel and save VOD server resources and bandwidths. Meanwhile, if some data is missed, the unicast mode is used to play the program from the beginning so that the user may enjoy the VOD service.

In block 702, the client device receives data from the nVOD multicast channel and plays the program at the regular rate by using the data received from the nVOD multicast channel or receives multicast and unicast data at the same time. After the client device receives control commands from the user, the process goes to block 703.

Block 703: Judge the control commands of the user, and respond to these commands in different ways.

If the user selects such functions as fast forward and fast rewind which are unavailable on the nVOD multicast channel, the process goes to block 704, that is, switch back to unicast.

If the user performs pause or positioning, the process goes to block 706, that is, stop receiving the data of the nVOD multicast channel, and leave the multicast channel.

If the user performs stop, the process goes to block 709, that is, terminate the playing.

Block 704: Switch from multicast to unicast. See block 601 to 604 for details.

After block 704 is executed, the client device receives the VOD unicast data, and performs fast forward or fast rewind by using the received VOD unicast data. After the client device receives other control commands from the user, the process goes to block 705.

Block 705: Judge the control commands of the user, and respond to these commands in different ways.

If the user performs fast forward or fast rewind all the time, the status remains unchanged; if the user performs pause or positioning, the process goes to block 707, that is, stop receiving the unicast data of the VOD server.

If the user plays the program at the regular rate, the process goes to block 702, that is, switch to an nVOD multicast channel so as to save VOD server resources and network bandwidths.

If the user performs stop, the process goes to block 709, that is, terminate the playing.

Block 706: Stop the process of receiving the multicast data of the nVOD multicast channel.

This process is equivalent to a process of leaving the multicast channel by the client device in the IPTV technology. If positioning is performed, the process goes to block 702; if pause is performed, the client device receives neither the data of the nVOD multicast channel nor the VOD unicast data after block 706 is executed. The process goes to block 708 after the client device receives the control commands from the user.

Block 707: Stop receiving the unicast data.

This process is equivalent to a process of sending a pause message over RTSP by the client device in the IPTV technology. If positioning is performed, the process goes to block 702. If pause is performed, the process goes to block 708.

Block 708: Judge the control commands of the user, and respond to these commands in different ways.

If the user performs fast forward or fast rewind, the process goes back to step 704, that is, switch back to the VOD server. If the user plays the program at the regular rate, the process goes back to block 702, that is, switch to an nVOD multicast channel so as to save VOD server resources and network bandwidths. If the user stops playing the program, the process goes back to block 709, that is, terminate the playing.

When the user uses the service, block 702, 704, 706, and 707 may not be executed, or may be executed one or more times according to the control commands of the user.

The following describes a method for selecting the closest nVOD multicast channel.

The start time of the nVOD is recorded as t0, the program duration is recorded as tp, and the number of nVOD multicast channels is recorded as n.

The obtaining unit 41 obtains the unicast URL of a program on demand and the playing start time and multicast ID of each multicast video program associated with the program from the EPG. Alternatively, the playing start time of each multicast video program may be replaced by the start time of a multicast channel and the initial offset between the channels. For example, supposing the start time of six multicast channels associated with a program lasing one hour is 08:00:00, 08:10:00, 08:20:00, 08:30:00, 08:40:00, and 08:50:00, the time offsets between these six multicast channels are 00:00:00, -00:10:00, -00:20:00, -00:30:00, -00:40:00, and -00:50:00; supposing the start time of channel 1 among the six multicast channels associated with the program lasting one hour is 08:00:00, the time offsets between the remaining five channels and channel 1 are 00:50:00, 00:40:00, 00:30:00, 00:20:00, and 00: 1 0:00.The order in which the time offsets are arranged may not affect the subsequent algorithms. Because the subsequent calculation is based on the time, each component of the system use a unified time benchmark, but the method for synchronizing the time may be different.

The client device requires the playing start time to be ts, which is relative to the position where the program is played initially. For example, if the client device plays the program from the beginning, ts is equal to 0; if the client device fast forwards the program 15 minutes after the program is played, ts is equal to 15 minutes; if the client device fast rewinds the program 01:05:06 after the program is played, ts is equal to 01:05:06.

The time when the user plays the program at the regular rate is t, which is relative to t0. The relative offset time that is not greater than tp is recorded as tm, which is obtained by performing a modulo operation on tp after t0 is subtracted from t.

Each nVOD multicast channel is located in different positions at t, which are recorded as (t1, t2, ..., tn). Supposing there are n nVOD multicast channels, tn indicates the time until which channel n is played, which is relative to the start time of the program. tn is obtained by performing a modulo operation on tp after tm is added to the initial offset.

The preceding step is to calculate the time until which any channel is played, and which is relative to the start time of the program. The specific calculation process is not limited. For example, for channel i, t0 is subtracted from t and the initial offset of channel i is added; then ti is obtained by performing a modulo operation on tp.

The set of t1 to tn that are greater than or equal to ts is recorded as (ti, tj, ...).

The minimum value of this set is recorded as min (ti, tj, ...). Supposing min(ti, tj, ...) = tj and 1 <= j <= n, channel j is the closest nVOD multicast channel. This means that the channel with the playing time equal to or approximately equal to the required playing time is the channel with the minimum time relative to the header of the program among all the channels with the playing time greater than or equal to the required playing time. When the required playing position is closest to the tail of the program, the unicast link may be used to play the rest of the program.

The functional unit for selecting the closest nVOD multicast channel is the switching control unit shown in Figure 4. It may be configured in the client device or other network devices, for example, the EPG, and may also be configured as an independent device.

The client device may interact with the VOD server over a unicast control protocol (for example, RTSP) to fast forward or fast rewind the program.

This process is hereinafter described in detail in multiple typical scenarios on the basis of the following parameters: tp = 1 hour, n = 6, the time offset for playing each nVOD multicast channel is 10 minutes (1 hour divided by 6), and t0 = 9:00:00.

Supposing each channel initially plays the program as follows:

Channel 1 begins to play the program on a cyclic basis from 0 minutes of the program;

Channel 2 begins to play the program on a cyclic basis from 10 minutes of the program;

Channel 3 begins to play the program on a cyclic basis from 20 minutes of the program;

Channel 6 begins to play the program on a cyclic basis from 50 minutes of the program.

After 10 minutes, the status of each channel is as follows:

Channel 1 begins to play the program on a cyclic basis from 10 minutes of the program;

Channel 2 begins to play the program on a cyclic basis from 20 minutes of the program;

Channel 3 begins to play the program on a cyclic basis from 30 minutes of the program;

Channel 6 begins to play the program on a cyclic basis from 0 minute of the program.

Because each channel plays the program on a cyclic basis, there is always an nVOD multicast channel that plays the program from the beginning.

Based on this,
t0 = 9:00:00
tp = 1 hour
n=6

The initial time offsets of channel 1 to channel 6 are 0, 10, 20, 30, 40, and 50 minutes.

Scenario 1: If the user begins to play the program on demand, the client device switches to an nVOD multicast channel.

When the client device begins to watch the program, the following three typical processes are involved.

Scenario 1-A: An nVOD multicast channel begins to play the program.

The client device watches the program from the beginning, so ts is equal to 0.

t = 9:00:00, t - t0 = 0, and tm = 0.

Because tm = 0, it can be calculated by performing a modulo operation on tp after tm is added to the initial offset of each channel that (t1, t2, ..., tn) = (0, 10, 20, 30, 40, 50).

Because ts = 0, the set of t1 to tn that are greater than or equal to ts is recorded as (ti, tj, ...) = (0, 10, 20, 30, 40, 50).

min(ti, tj, ...) = t1 = 0, so channel 1 is the closest nVOD multicast channel and the playing position is 0.

The playing position required by the client device is 0 and the playing position of the closest nVOD multicast channel is also 0. That is, the playing position of the closest nVOD multicast channel is the same as the expected playing position. Thus, the client device may access the nVOD multicast channel to watch the program from the beginning, without establishing a unicast link with the VOD server.

The process of selecting the data of the closest nVOD multicast channel is a process of joining the multicast channel by the client device in the IPTV technology.

In practical applications, it is difficult to make two time points equal. Thus, a tolerance range may be set, in which the data loss or overlapping may not affect the watching experience of the user. For example, if an nVOD multicast channel plays the program for 0.2 second or an nVOD multicast channel begins to play after 0.1 second, the client device may receive this nVOD multicast channel directly.

Scenario 1-B: The client device misses an nVOD channel when it begins to watch the program. In this case, the client device may buffer the data of the missed nVOD channel. Meanwhile, the client device requests the missed data from the VOD server, and plays the program from the beginning.

The playing control of the client device and the VOD server complies with the RTSP protocol. When the VOD server plays from the beginning until the header of the buffered nVOD channel data, the client device stops receiving data from the VOD server, and uses the buffered nVOD channel data to continue the playing. The client device receives nVOD channel data while the playing is continued.

(1) Selecting an nVOD channel

The following description supposes that the user requests to watch the program from the beginning at 9:32:00.

The client device watches the program from the beginning, so ts is equal to 0.

t = 9:32:00, t - t0 = 32, and tm = 32 minutes.

Because tm = 32 minutes, it can be calculated by performing a modulo operation on tp after tm is added to the initial offset of each channel that (t1, t2, ..., tn) = (32, 42, 52, 2, 12, 22). Taking channel 4 as an example, 30 + 32 = 62 minutes. After performing a modulo operation on this value, 2 minutes are obtained.

Because ts = 0, the set of t1 to tn that are greater than or equal to ts is recorded as (ti, tj, ...) = (32, 42, 52, 2,12, 22).

Min (ti, tj, ...) = t4 = 2 minutes, so channel 4 is the closest nVOD multicast channel and the playing position is 2 minutes.

(2) Receiving VOD and nVOD data at the same time

The playing position required by the client device is 0, and the playing position of the closest nVOD channel is 2 minutes. That is, the playing position of the closest nVOD channel is not equal to the expected playing position. This means that the client device has missed 2 minutes of data from the closest nVOD channel. Then, the received data of nVOD channel 4 is buffered and the missed data of 2 minutes is obtained from the VOD server. The data received from the VOD server is used to play the program. During this period, the VOD and nVOD data are received.

(3) Switching to the state of using the nVOD data after the tail of the VOD data is connected to the header of the nVOD data.

The client device begins to watch the program at 09:32:00.

For VOD, the program is played from the beginning. Thus, the client device receives data of 0 minutes of the program at 09:32:00.

For nVOD, the client device receives data of 2 minutes of the program at 09:32:00 because the program is played for 2 minutes. Then, the data is buffered for the backup purpose.

From 09:32:00, the client device receives the data of VOD and nVOD at the same time. Until 09:34:00, the client device receives data from 0 minutes to 2 minutes from the VOD server and data from 2 minutes to 4 minutes from the nVOD server.

Until 09:34:00, the tail of the data received from the VOD server is connected to the header of the data received from the nVOD server.

Multiple methods are available for judging whether the VOD data is connected to the nVOD data. The methods are not limited and can be selected according to specific transmission formats. For example, when there is an RTP packet, the judgment may be made according to the timestamp of the RTP packet, or the judgment may be made by using the PCR in the TS packet, or the judgment may be made by using the TS serial number and comparing data contents. In addition, partial improvement may be made without changing the overall process. For example, in the preceding process, the client device obtains data from the VOD server at the regular rate. However, if the network bandwidth permits, the client device is allowed to obtain the data from the VOD server at a bit rate higher than the regular rate. Thus, the time for connecting the VOD data to the nVOD data may be shortened without changing the overall process.

Because the data after 2 minutes of the program is already received from the nVOD channel, the stop command (TEARDOWN) may be used over the RTSP protocol to disconnect the VOD server. After the data received from the VOD server is played completely, the buffered nVOD channel data is used to continue the playing. In addition, the nVOD channel data is received while the playing is continued.

Then, control is performed according to the control commands of the user.

Scenario 2: During the playing, the process of switching from multicast to unicast is triggered.

When the client device receives the program of the nVOD multicast channel, the client device leaves the nVOD multicast channel and uses such functions as fast forward, fast rewind, pause, and positioning that the VOD server provides if the user performs fast forward, fast rewind, pause and positioning. In the IPTV technology, scenario 2 is a process of leaving the nVOD multicast channel, establishing an RTSP session with the VOD server and then performing such operations as fast forward and fast rewind.

Scenario 3: During the playing, the process of switching from multicast to unicast is triggered.

After using such functions as fast forward, fast rewind, pause, and positioning that the VOD server provides, the client device resumes the playing at the regular rate. Similar to scenario 1, this scenario requires the client device to join an nVOD multicast channel.

Scenario 3-A: When resuming the playing at the regular rate, the client device may access the nVOD multicast channel to continue watching the program if the current playing point is synchronous with an nVOD multicast channel.

Scenario 3-B: When resuming the playing at the regular rate, the client device receives and buffers the data of the missed nVOD multicast channel while continuing playing the program from the VOD server if there is no nVOD multicast channel that is synchronous with the current playing point. The missed nVOD multicast channel is the nVOD multicast channel of which the playing time point is later than the current VOD time point and is closest to the current the VOD time point.

(1) Selecting an nVOD multicast channel

Supposing the user requests to watch a program from the time of 00:12:34 of the program at 14:56:28, then
t = 14:56:28; ts = 00:12:34;
t - t0 = 14:56:28 - 09:00:00 = 05:56:2; tm = 00:56:28.

It can be calculated by performing a modulo operation on tp after tm is added to the initial offset of each channel that (t1, t2, ..., tn) = (00:56:28, 00:06:28, 00:16:28, 00:26:28, 00:36:28, 00:46:28). Taking channel 4 as an example, 00:30:00 + 00:56:28 = 0 :26:28. After a modulo operation is performed on this value by using one hour, the result is 00:26:28. This method is applicable to other channels.

Because ts = 00: 12:34, the set of t1 to tn that are greater than or equal to ts is recorded as (t1, t3, t4, t5, t6), which is equal to (00:56:28, 00:16:28, 00:26:28, 00:36:28, 00:46:28), where t2 is removed due to failure to meet the condition.

Min (ti, tj, ...) = t3 = 00:16:28, so channel 3 is the closest nVOD multicast channel and the playing position is 00:16:28.

(2) Receiving VOD and nVOD data at the same time

The playing position required by the client device is 00:12:34, and the playing position of the closest nVOD multicast channel is 00:16:28. That is, the playing position of the closest nVOD multicast channel is different from the expected playing position, indicating that the client device has missed 00:03:54 minutes of data from the closest nVOD multicast channel (equal to 00:16:28 minus 00:12:34). Then, the client device receives the data ofnVOD multicast channel 3, and obtains the missed data from the VOD server. The client device plays the program by using the data obtained from the VOD server. During this period, the client device still receives VOD and nVOD data.

(3) Switching to the state of using the nVOD data after the tail of the VOD data is connected to the header of the nVOD data.

It is necessary to judge whether the VOD data is connected to the nVOD data.

Supposing the user requests to watch a program from the time of 00:12:34 of the program at 14:56:28, then

For VOD, the program is played from 00:12:34 of the program. Thus, the client device receives data of 00:12:34 of the program at 14:56:28.

For nVOD, the client device receives the data of 00:16:28 at 14:56:28 because the program is played for 00:16:28 minutes. Then, the data is buffered for the backup purpose.

From 14:56:28, the client device receives VOD and nVOD data at the same time. Until 15:00:22, the client receives the data between 00:12:34 and 00:16:28 of the program from the VOD server within the time of 00:03:54 (00:16:28 - 00:12:34 = 15:00:22 -14:56:28 = 00:03:54).

Because the data after 00:16:28 minutes of the program is already received by the nVOD channel, the stop command (TEARDOWN) may be used over the RTSP protocol to disconnect the VOD server. After the data received from the VOD server is played completely, the buffered nVOD multicast channel data is used to continue the playing. In addition, the nVOD channel data is received while the playing is continued.

In the IPTV technology, the digital broadcast and TV programs between the nVOD server and the DSLAM or switch are generally transmitted in multicast mode, but may also be transmitted in unicast mode. Though the preceding solution is based on common multicast, the technical solution for transmitting digital and TV programs between the nVOD server and the DSLAM or switch in the embodiment of the present invention involves the multicast and unicast (including tunnel) modes. In the IPTV technology, the DSLAM or switch is an example of a broadband access device. The technical solution provided in the embodiments of the present invention also includes such broadband access devices as the APON, BPON, GPON, EPON, or wireless access device.

In a digital television (DTV) technology, multicast programs cannot be transmitted on a cable TV network, and the digital broadcast and TV programs between the encoder and the client device are transmitted through the modulated TS. However, these programs may also be transmitted in the mode same as that in IPTV. In IPTV, it is necessary to control the joining and leaving of multicast channels. In the cable TV network, however, there is neither multicast nor IP packet. Thus, the TS data is modulated and broadcast, and the client device (generally a set-top box) receives the data by tuning to the related frequency, and decodes the PID data. The embodiment in IPTV is easy to implement in DTV because the VOD/nVOD service is already implemented in DTV.

In mobile television (MTV), some IP networks are replaced by wireless networks, the DSLAM/switch is replaced by a wireless base station, and the set-top box is replaced by a mobile phone. However, the technical solution provided in the embodiments of the present invention may also be implemented in MTV.

For common VOD, the unicast mode is used, and each user needs to occupy an independent bandwidth. For example, if 10,000 users play a program on demand at the same time, 10,000 bandwidths need to be occupied. After the technical solution is used, six bandwidths are needed if six nVOD multicast channels are set for each program. Because most of users watch the program normally during most of the playing time, six bandwidths of the nVOD are used. The unicast mode is used when the user begins to play the program or performs fast forward or fast rewind on the program. The time for playing the program initially or performing fast forward or fast rewind on the program accounts for 10% to 30% of the total playing time. Even if the preceding time accounts for 30%, the required unicast bandwidth is equal to 3000 (10000 × 30%), and the total of bandwidths for unicast and multicast is equal to 3006. 10,000 divided by 3006 is equal to 3.3. Thus, the technical solution provided by the embodiments of the present invention may use bandwidths three times fewer than common VOD. It is also called "VOD Solution Occupying Small Bandwidths".

In conclusion, in the technical solution provided by the embodiments of the present invention, the unicast technology and multicast/broadcast technology are used to select and join a closest multicast/broadcast channel to receive and buffer the multicast data of the video program when the user plays the program on demand. If the tolerance between the playing start time of the multicast video program on the multicast/broadcast channel and the playing time of the video program on demand is within the preset threshold, the VOD service may be implemented through the multicast channel. Otherwise, the missed data is received from the unicast server, and the unicast link is disconnected when the unicast data is connected to the multicast data. Then, the unicast data and multicast data are played continuously by using the buffer capacity of the client device. This also enables the user to enjoy the VOD service. If the user performs such functions as fast forward or fast rewind that the multicast server cannot provide, switching may be performed to provide the unicast function of the unicast server. During this process, the unicast server is occupied when it is necessary to obtain the missed data from the unicast server or when the user performs fast forward or fast rewind, thus reducing costs in server and network bandwidths and providing cost-effective and efficient VOD services.

The technical solution provided by the embodiments of the present invention may be implemented by hardware and software. The software may be stored in a readable storage medium, for example, a floppy disk, a hard disk, or a compact disk.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications, equivalent substitutions and variations provided that they fall in the scope of protection defined by the following claims or their equivalents.

## Claims

1. A video on demand ,VOD, control method, comprising:
receiving a VOD command from a user, selecting and joining a multicast or broadcast channel with playing time close to playing start time of a video program that the user plays on demand, receiving data of the video program from a multicast or broadcast server, and buffering the data;
judging whether a tolerance between the playing time of the video program on the multicast or broadcast channel and the playing time of the video program on demand is within a preset threshold; if so, playing the buffered multicast or broadcast data; otherwise
establishing a unicast link with a unicast server, receiving the video program data through the unicast link, and playing the video program data, disconnecting the unicast link when a tail of the received data is connected to a header of the buffered data, and continuing to play the video program by using the buffered data.

2. The method of claim 1, wherein when the unicast link is available and a command for fast forwarding or fast rewinding the video program is received from the user, the method further comprises:
sending the fast forward or fast rewind command to the unicast server and leaving the multicast channel; and
receiving data sent by the unicast server according to the fast forward or fast rewind command, and playing the data.

3. The method of claim 1, wherein when the unicast link is unavailable and a command for fast forwarding or fast rewinding the video program is received from the user, the method further comprises:
establishing a unicast link with the unicast server and leaving the multicast channel;
sending the fast forward or fast rewind command to the unicast server; and
receiving data sent by the unicast server according to the fast forward or fast rewind command, and playing the data.

4. The method of claim 2 or 3, wherein when a command for playing the program at a regular rate is received from the user during fast forward or fast rewind, the method further comprises:
re-selecting and joining a multicast or broadcast channel with playing time close to regular playing time of the video program, receiving the data of the video program from the multicast or broadcast server, and buffering the data; and
receiving the data of the video program through the unicast link and playing the data, disconnecting the unicast link when the tail of the received data is connected to the header of the buffered data, and continuing to play the video program by using the buffered data.

5. The method of claim 2 or 3, wherein when a command for pausing or positioning the video program is received during fast forward or fast rewind, the method further comprises:
stopping receiving the unicast data, and keeping the unicast link.

6. The method of claim 5, wherein when the playing is resumed after pause or positioning, the method further comprises:
re-selecting and joining a multicast or broadcast channel with playing time close to resumed playing time of the video program, receiving the data of the video program from the multicast or broadcast server, and buffering the data; and
receiving the data of the video program through the unicast link and playing the data, disconnecting the unicast link when the tail of the received data is connected to the header of the buffered data, and continuing to play the video program by using the buffered data.

7. The method of claim 2 or 3, wherein when a command for pausing or positioning the video program is received during fast forward or fast rewind, the method further comprises:
stopping sending unicast data, and disconnecting the unicast link.

8. The method of claim 7, wherein when the playing is resumed after pause or positioning, the method further comprises:
re-selecting and joining a multicast or broadcast channel with playing time close to resumed playing time of the video program, receiving the data of the video program from the multicast or broadcast server, and buffering the data; and
judging whether the tolerance between the playing time of the video program on the multicast or broadcast channel and the playing time of the video program on demand is within the preset threshold; if so, playing the buffered data; otherwise
re-establishing the unicast link with the unicast server, receiving the data of the video program through the re-established unicast link, and playing the data of the video program, disconnecting the unicast link when the tail of the received data is connected to the header of the buffered data, and continuing to play the video program by using the buffered data.

9. The method of claim 1, wherein when the unicast link is available and a command for pausing or positioning the video program is received from the user, the method further comprises:
leaving the joined multicast channel and keeping the unicast link.

10. The method of claim 9, wherein when the playing is resumed after pause or positioning, the method further comprises:
re-selecting and joining a multicast or broadcast channel with playing time close to resumed playing time of the video program, receiving the data of the video program from the multicast or broadcast server, and buffering the data; and
receiving the data of the video program through the unicast link and playing the data, disconnecting the unicast link when the tail of the received data is connected to the header of the buffered data, and continuing to play the video program by using the buffered data.

11. The method of claim 1, wherein when the unicast link is available and a command for pausing or positioning the video program is received from the user, the method further comprises:
leaving the joined multicast channel and disconnecting the unicast link.

12. The method of claim 1, wherein when the unicast link is unavailable and a command for pausing or positioning the video program is received from the user, the method further comprises:
leaving the joined multicast channel.

13. The method of claim 11 or 12, wherein when the playing is resumed after pause or positioning, the method further comprises:
re-selecting and joining a multicast or broadcast channel with playing time close to resumed playing time of the video program, receiving the data of the video program from the multicast or broadcast server, and buffering the data; and
judging whether the tolerance between the playing time of the video program on the multicast or broadcast channel and the playing time of the video program on demand is within the preset threshold; if so, playing the buffered data; otherwise
re-establishing the unicast link with the unicast server, receiving the data of the video program through the re-established unicast link, and playing the data of the video program, disconnecting the unicast link when the tail of the received data is connected to the header of the buffered data, and continuing to play the video program by using the buffered data.

14. A client device, comprising:
a decoding and outputting unit, adapted to decode data of a video program and output the data for displaying;
an obtaining unit, adapted to obtain unicast information of the video program and multicast or broadcast information on each multicast or broadcast channel, and receive playing control commands from a user;
a switching control unit, adapted to switch between multicast and unicast according to the playing control commands of the user, unicast information of the program, and information of each multicast channel;
a unicast control unit, adapted to establish a unicast link with a unicast server or disconnect the unicast link according to the control of the switching control unit;
a unicast data receiving and buffering unit, adapted to receive and buffer the data of the video program through the unicast link established by the unicast control unit, and output the buffered data to the decoding and outputting unit;
a multicast control unit, adapted to join or leave a multicast or broadcast channel selected by the switching control unit according to the control of the switching control unit; and
a multicast data receiving and buffering unit, adapted to receive the data of the video program from the multicast channel joined by the multicast control unit, and buffer the data, and output the buffered data to the decoding and outputting unit after the data of the unicast data receiving and buffering unit is output according to the control of the switching control unit.

15. The client device of claim 14, wherein the switching control unit is further adapted to control continuous playing by using the buffered multicast data after the unicast data is played.

16. The client device of claim 14, wherein the unicast control unit is further adapted to control the unicast data receiving and buffering unit to receive and buffer the data of the video program.

17. The client device of claim 14, wherein the multicast control unit is further adapted to control the multicast data receiving and buffering unit to receive and buffer the data of the video program.

18. A switching control apparatus, comprising:
an obtaining unit, adapted to obtain unicast information of a video program and multicast or broadcast information on each multicast or broadcast channel, and receive playing control commands from a user; and
a switching control unit, adapted to switch between multicast and unicast according to the playing control commands of the user, unicast information of the program, and information of each multicast channel.

19. The switching control apparatus of claim 18, wherein the switching control unit is further adapted to give instructions for joining a multicast or broadcast channel with playing time close to playing start time of the video program on demand according to the received VOD commands, and playing the buffered multicast or broadcast data when a tolerance between the playing time of the multicast video program on the multicast or broadcast channel and the playing time of the video program on demand is within a preset threshold.

20. The switching control apparatus of claim 18, wherein the switching control unit is further adapted to give instructions for joining a multicast or broadcast channel with playing time close to playing start time of the video program on demand according to the received VOD commands, establishing a unicast link with a unicast server when a tolerance between the playing time of the multicast video program on the multicast or broadcast channel and the playing time of the video program on demand is within a preset threshold, and receiving the data of the video program through the unicast link, and playing the data of the video program.

21. The apparatus of claim 18, wherein the switching control unit is further adapted to give instructions for disconnecting the unicast link when judging that a tail of the received unicast data is connected to a header of the buffered data, and outputting the buffered multicast data after the unicast data is played.
